# EUROPEAN PATENT APPLICATION

(11) **EP 4 068 574 A1**
(43) Date of publication of application: **05.10.2022**
(21) Application number: 21166146.7
(22) Date of filing: 31.03.2021
(51) Int. Cl.: H02K 1/18, H02K 1/04, H02K 7/18, H02K 15/02

(54) **FINGER PLATE ELEMENT AND STATOR FOR AN ELECTRIC MACHINE, WIND TURBINE, AND METHOD FOR MANUFACTURING A FINGER PLATE ELEMENT**

(71) Applicant: Siemens Gamesa Renewable Energy A/S, 7330 Brande (DK)
(72) Inventor: Jensen, Simon Vyff, 7160 Tørring (DK)
(74) Representative: SGRE-Association

(57) **Abstract**

The present invention describes a finger plate element (100) mountable to an axial end (401) of a stator (400) for an electric machine, in particular a wind turbine (1), the finger plate element (100) comprising a plurality of sheets (201, 301) forming a laminated stack (200, 300) having a fixation portion (110) which is formed for being fixable to a support structure (450) of the stator (400), and a winding accommodation portion (120) configured for accommodating windings (470) of the stator (400), wherein the fixing portion (110) extends in a radial direction (101) from the winding accommodation portion (120) to an inner radial end (161) of the laminated stack (200, 300), and wherein the winding accommodation portion (120) is coupleable to a lamination stack (430) of the stator (400) for being in magnetic interaction with the lamination stack (430) of the stator (400). Furthermore, a stator (400), a wind turbine (1), and a method for manufacturing a finger plate element (100) are described.

## Description

### Field of invention

The present invention relates to the field of electric machines, more specifically to the field of wind turbines. Particularly, the present invention relates to a finger plate element mountable to an axial end of a stator for an electric machine, to a stator for an electric machine, to a wind turbine comprising a stator, and to a method for manufacturing a finger plate element mountable to an axial end of a stator for an electric machine.

### Art Background

In today's segment designs for large electric machines, such as wind turbines, many aspects and constraints have to be taken into consideration. In many cases it is not possible to utilize the maximum length of the stator due to boundary conditions from surrounding components and/or due to the segmented support structure design itself. This causes a lower performance compared to what would theoretically be available. Hence, less torque with lower output power is the result. There is thus a desire for maximizing the torque output of the generator without adding significant costs to the generator. To utilize the maximum length of the stator, a significantly more complex support structure design with flattened and welded pressure plates would be required. However, this would increase the costs significantly.

Conventionally, the support structure is designed with simple machined pressure plates with a finger plate in one end. The electrical lamination sheet is stacked, in packages, from the integrated finger plate to the other end of the support structure. The lamination is enclosed in the support structure by either bolting or welding on a finger plate in the open end of the support structure.

Hence, there may be a need for a way of flexibly increasing the effective size of the stator without adding complexity and corresponding costs.

### Summary of the Invention

It may be an objective of the present invention to provide a cost-efficient stator with an increased power output and a decreased complexity.

This objective may be solved by a finger plate element, by a stator for an electric machine, by a wind turbine, and by a method for manufacturing a finger plate element according to the independent claims.

According to a first aspect of the present invention a finger plate element mountable to an axial end of a stator for an electric machine, in particular a wind turbine is disclosed. The finger plate element comprises a plurality of sheets forming a laminated stack having a fixation portion which is formed for being fixable to a support structure of the stator, and a winding accommodation portion configured for accommodating windings of the stator. Further, the fixing portion extends in a radial direction from the winding accommodation portion to an inner radial end of the laminated stack, and the winding accommodation portion is coupleable to a lamination stack of the stator for being in magnetic interaction with the lamination stack of the stator.

The invention is based on the idea that the effective length of the lamination stack is extended beyond the length of the support structure by adding the laminated stack having the fixation portion and the winding accommodation portion in such a way that the fixation portion may be fixed to the support structure, and the winding accommodation portion may be coupled to the lamination stack of the stator for being in magnetic interaction with the lamination stack. Thereby, the total length of the lamination stack may be enlarged by the winding accommodation portion. The amount of extension can be chosen in view of the space available and thus allows a relatively simple optimization of the resulting stator.

A radial direction of the finger plate element according to the present invention corresponds to a radial direction of the stator to which the finger plate element is mountable.

An axial direction of the finger plate element according to the present invention corresponds to an axial direction of the stator to which the finger plate element is mountable.

A circumferential direction of the finger plate element corresponds to a circumferential direction of the stator to which the finger plate element is mountable.

The axial end of the stator may be an outer axial end of the support structure or an outer axial end of a support structure segment seen in the axial direction of the stator.

The plurality of sheets forming the laminated stack may be a package of individual electrically conductive sheets, for example metal sheets. Each of the plurality of sheets may be manufactured by for example die cutting or laser cutting.

The fixation portion extends in the radial direction from the winding accommodation portion to an inner radial end of the lamination stack. Further, the winding accommodation portion extends in the radial direction between the fixation portion and an outer radial end of the laminated stack. Hence, the laminated stack comprises the inner radial end and the outer radial end spaced apart from the inner radial end in the radial direction. Seen from a rotational axis of the stator in the radial direction, the laminated stack comprises the inner radial end, the fixation portion, the winding accommodation portion, and the outer radial end.

The winding accommodation portion is coupleable to a lamination stack of the stator for being in magnetic interaction with the lamination stack of the stator means in other words, that the winding accommodation portion is formed such that the winding accommodation portion may be usable as a magnetic extension of the lamination stack during an operation of the stator.

The laminated stack having a winding accommodation portion and a fixation portion may mean that the winding accommodation portion and the fixation portion are portions/sections of one integral laminated stack.

According to an exemplary embodiment of the invention, the winding accommodation portion comprises a plurality of fingers configured for accommodating the windings of the stator, wherein each of the plurality of fingers extends in the radial direction.

The plurality of fingers may allow to accommodate one winding of the stator between two neighbouring fingers such that a magnetic interaction between the laminated stack, particularly the winding accommodation portion, and the lamination stack of the stator may be ensured.

The winding accommodation portion further comprises a yoke (support section) which interconnects the plurality of fingers each extending in the radial direction. The yoke is formed between the fixation portion and the plurality of fingers seen in the radial direction. Additionally, the yoke is formed such that the windings of the stator may be supported. In other words, the yoke may be formed such that the windings of the stator may lie on the support section. Additionally, the yoke may be formed for providing a magnetic frame of the stator. Particularly, in a plane having a normal being parallel to the axial direction, the shape of the winding accommodation portion may correspond to the shape of the lamination stack of the stator to which the finger plate element is mountable.

Each finger has an extension in the radial direction being larger than an extension in the circumferential direction.

According to an exemplary embodiment of the present invention, the fixation portion comprises a plurality of through holes for inserting fastening elements for fixing the laminated stack to the support structure of the stator.

Each through hole extends through the entire laminated stack. The through hole may have a flat inner wall or may have an internal thread. The flat inner wall may allow an easy and fast manufacturing of the through hole. The internal thread may allow an increased fastening effect.

The fastening element may be shaped to fit into the through hole. For example, the fastening element may be a screw with an external thread which may engage the internal thread of the through hole. Thereby, an even load transmission over the entire length of the internal thread into the fixation portion and hence into the laminated stack may be possible. According to a further example, the fastening element may be a bolt which is inserted into the through hole having the flat inner wall. The bolt may fasten the laminated stack to the support structure by a dowel pin in a lateral hole, by a screw nut screwed on an external thread on an end portion of the bolt, or a locking ring in a circumferential groove. The use of a bolt may allow a fast and easy assembly and/or disassembly.

According to an exemplary embodiment of the present invention, the laminated stack comprises an arc-like shape in a circumferential direction.

The arc-like shape ensures that several finger plate elements may be arranged side by side to form a closed circle corresponding to a round stator.

Particularly, the arc-like shape may be such that the closed circle corresponding to the round stator may be made of six, twelve or sixteen finger plate elements.

According to an exemplary embodiment of the present invention, the laminated stack comprises a first circumferential end and a second circumferential end being spaced apart from the first circumferential end in the circumferential direction by an angle α between 20° and 60°.

In other words, the fixation portion and the winding accommodation portion both extend between the first circumferential end and the second circumferential end. Hence, the finger plate element may comprise as outer boundaries seen in a plane having a normal parallel to the axial direction, the first circumferential end, the outer axial end, the second circumferential end and the inner axial end.

Setting the angle α to 20° ≤ α ≤ 60° may allow a good compromise between an easy handling of the segment due to a reduced weight of the segment and an additional work due to an assembly of the different segments.

Particularly, the angle α may be an angle of 60°, 30° or 22,5°. By setting the angle α to 60°, six identical finger plate elements together may be mounted to form a closed annular stator. By setting the angle α to 30°, twelve identical finger plate elements together may be mounted to form a closed annular stator. By setting the angle α to 22,5°, sixteen identical finger plate elements together may be mounted to form a closed annular stator. Using six, twelve or sixteen identical finger plate elements may allow a fast and robust assembly of the stator.

According to an exemplary embodiment of the present invention, the laminated stack further comprises a plurality of interconnecting layers alternatingly arranged along an axial direction with the plurality of sheets.

The plurality of sheets may be formed of metal. The plurality of interconnecting layers may be made of a material which is at the same time electrically insulating and adhesive.

By alternatingly arranging the sheets and the interconnecting layers, the individual sheets may be separated by the interconnecting layers to suppress eddy current losses under dynamic magnetic loading. Additionally, the laminated stack may save weight compared to the use of a solid metal block.

The laminated stack made of the plurality of sheets alternatingly arranged with the plurality of interconnecting layers may be manufactured by a backlack process. During the backlack process the plurality of interconnecting layers may be a special coating ("backlack") such that the plurality of sheets may be bonded together by heating or by using a solvent. The backlack process may allow to form a precise and stable laminated stack allowing an easy mounting and an increased mechanical processing.

According to an exemplary embodiment of the present invention, the fixation portion comprises a fixation thickness in an axial direction, and the winding accommodation portion comprises a winding accommodation thickness in the axial direction. Additionally, the winding accommodation thickness and the fixation thickness are equal.

The fixation thickness is the thickness of the fixation portion measured in the axial direction. The winding accommodation thickness is the thickness of the winding accommodation portion measured in the axial direction. Particularly, the fixation thickness and the winding accommodation thickness are constant/uniform in the fixation portion respectively the winding accommodation portion.

The fixation thickness and the winding accommodation thickness being equal may allow an easy and fast manufacturing of the laminated stack.

Particularly, each of the plurality of sheets may comprise the fixation portion and the winding accommodation portion. Therefore, the fixation portion and the winding accommodation portion may comprise the same number of sheets.

According to an exemplary embodiment of the invention, the fixation portion comprises a fixation thickness in an axial direction and the winding accommodation portion comprises a winding accommodation thickness in the axial direction. Further, the fixation thickness is smaller than the winding accommodation thickness.

The fixation thickness being smaller than the winding accommodation thickness may allow an increased accessibility of the fixation portion during assembly of the stator.

Particularly, the fixation portion may comprise a lower number of sheets than the winding accommodation portion. Additionally, the winding accommodation portion comprises a first number of sheets equal to the number of sheets of the fixation portion and a second number of sheets forming an additional extension of the winding accommodation portion.

According to a second aspect of the invention there is provided a stator for an electric machine, in particular a wind turbine, wherein the stator comprises a finger plate element according to the first aspect, a support structure, a lamination stack and windings. Further, the fixation portion is fixed to the support structure at the axial end of the stator, and the winding accommodation portion is coupled to the lamination stack for being in magnetic interaction with the lamination stack.

This aspect of the invention is generally based on the idea that the effective length of the lamination stack of the stator is extended beyond the length of the support structure by adding the finger plate element comprising the laminated stack having the fixation portion and the winding accommodation portion in such a way that the fixation portion is fixed to the support structure, and the winding accommodation portion is coupled to the lamination stack of the stator for being in magnetic interaction with the lamination stack. Thereby, a larger and more efficient stator without significantly increasing costs may be provided.

The stator may be made of a plurality of interconnected stator segments. Particularly, providing six, twelve or sixteen interconnected stator segments may allow an easy and standardized production and assembly of the stator.

According to an exemplary embodiment of the invention, the winding accommodation portion comprises a plurality of fingers, wherein each of the plurality of fingers extends in the radial direction and extends between the windings. Further, the winding accommodation portion comprises a yoke for interconnecting the plurality of fingers and for forming a magnetic frame supporting the windings.

Each finger extending in the radial direction and between the windings allows the magnetic interaction of the winding accommodation portion and the lamination stack. Thereby, the effective length of the lamination stack is extended beyond the length of the support structure.

According to an exemplary embodiment of the invention, the winding accommodation portion comprises a winding accommodation thickness in an axial direction, and the winding accommodation thickness is between 5% and 25%, particularly between 5% and 15%, more particularly between 5% and 10%, of an axial length of the lamination stack in the axial direction.

The axial length of the lamination stack in the axial direction corresponds to the axial length of the support structure between the two opposite axial ends of the support structure.

Providing the winding accommodation thickness in the above-defined range may allow a good balance between increase of performance and efficiency as well as costs.

According to an exemplary embodiment of the invention, the winding accommodation portion comprises a radial length in the radial direction, and the lamination stack comprises a radial extension in the radial direction. Further, the radial length is equal to the radial extension.

The radial length of the winding accommodation portion being equal to the radial extension of the lamination stack may allow a uniform magnetic interaction.

Particularly, by providing the winding accommodation portion having the same shape as the lamination stack in a plane having a normal parallel to the axial direction, may allow an even more uniform magnetic interaction.

According to an exemplary embodiment of the invention, the stator further comprises a further finger plate element according to the first aspect, wherein the further finger plate element is mounted to an opposite axial end of the stator by the fixation portion of the further finger plate element.

The opposite axial end may be spaced apart from the axial end in the axial direction. In other words, the lamination stack of the stator is positioned between the finger plate element at the axial end of the stator and the further finger plate element at the opposite axial end of the stator.

Providing one finger plate element at each axial end of the stator may allow to use all of the available space in the stator. Therefore, a larger and more efficient stator without significantly increasing costs may be provided.

According to a third aspect of the invention, there is provided a wind turbine comprising a stator according to the above-described second aspect.

Compared to a similar wind turbine without an extended stator, the wind turbine according to this aspect may allow to produce a significantly larger amount of power during its lifetime without being significantly more expensive to produce.

According to a fourth aspect of the invention, there is provided a method for manufacturing a finger plate element mountable to an axial end of a stator for an electric machine, in particular a wind turbine. The method comprises (a) providing the finger plate element with a plurality of sheets forming a laminated stack having a fixation portion which is formed for being fixable to a support structure of the stator, and a winding accommodation portion configured for accommodating windings of the stator, (b) forming the fixation portion such that the fixation portion extends in a radial direction from the winding accommodation portion to an inner radial end of the laminated stack, and (c) forming the winding accommodation portion such that the winding accommodation portion is coupleable to the lamination stack of the stator for being in magnetic interaction with the lamination stack of the stator.

This aspect of the invention is based on the idea that the effective length of the lamination stack of the stator is extended beyond the length of the support structure by adding the finger plate element comprising the laminated stack having the fixation portion and the winding accommodation portion in such a way that the fixation portion may be fixed to the support structure, and the winding accommodation portion may be coupled to the lamination stack of the stator for being in magnetic interaction with the lamination stack. Thereby, the total length of the lamination stack may be enlarged by the winding accommodation portion. The amount of extension can be chosen in view of the space available and thus allows a relatively simple optimization of the resulting stator.

Furthermore, it should be noted that the finger plate element may comprise a variable length in the axial direction to utilize the available space in the stator. Thereby, the finger plate element may at the same time provide fixing of the lamination stack and adding a further laminated package. Hence, an active length of the stator may be extended without adding complexity to the segment support structure. In other words, an overhang lamination design may be provided.

This may result in an increase of torque respectively performance, efficiency (e.g., utilization of available space in the stator) and a decrease in costs, if compared to current stator designs. It may be possible to avoid limitations to the lamination stack due to boundary conditions from interface components within the stator. The winding accommodation thickness may be variable and may be adjusted to the specific available space in the stator. The winding accommodation thickness may be set up to 100% of the available space. Therefore, a more cost-efficient approach for achieving a higher power rating compared with existing stator designs may be provided.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

The aspects of the invention defined above and further aspects of the present invention may be apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a side view of a finger plate element according to an exemplary embodiment of the invention.
Fig. 2 shows a further side view of a finger plate element according to a further exemplary embodiment of the invention.
Fig. 3 shows a further side view of a finger plate element according to a further exemplary embodiment of the invention.
Fig. 4 shows a perspective section of a stator according to an exemplary embodiment of the present invention.
Fig. 5 shows a cross-sectional view of a stator according to a further exemplary embodiment of the present invention.
Fig. 6 shows a cross-sectional view of a stator according to a further exemplary embodiment of the present invention.
Fig. 7 shows a schematic view of a wind turbine including a stator according to an exemplary embodiment of the invention.

### Detailed Description

The illustrations in the drawings are schematically. It is noted that in different figures, similar or identical elements are provided with the same reference signs.

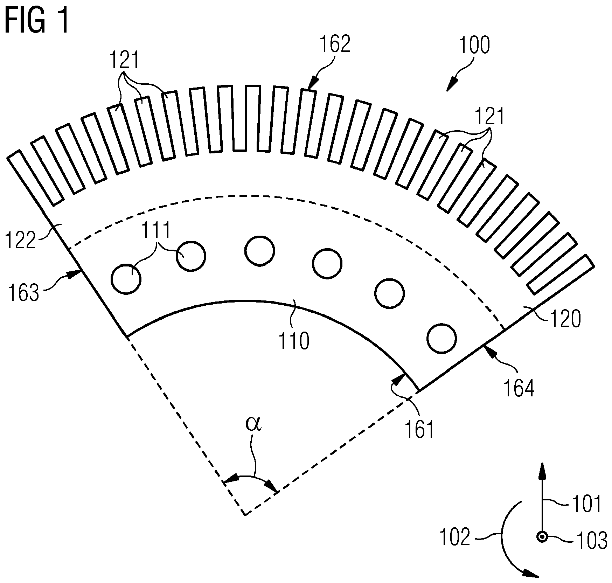

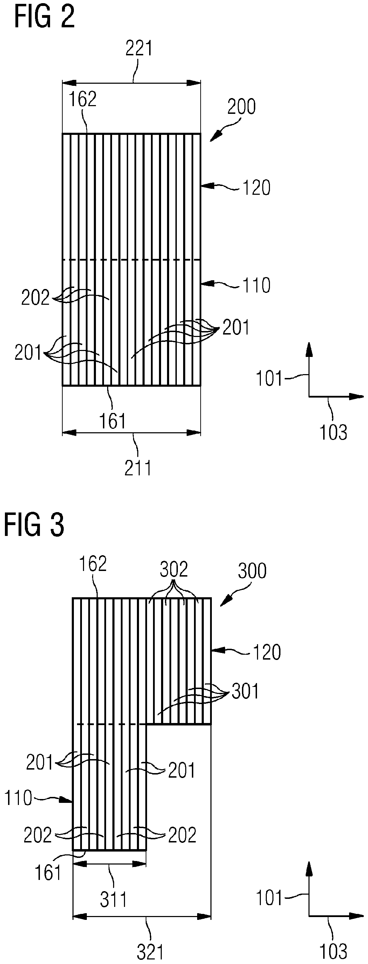

**Fig. 1** shows a finger plate element 100 according to an exemplary embodiment of the invention. The finger plate element 100 comprises a plurality of sheets (shown in more detail in Fig. 2 and Fig. 3) forming a laminated stack having a fixation portion 110 extending from an inner radial end 161 to a winding accommodation portion 120 in a radial direction 101. The winding accommodation portion 120 extends from the fixation portion 110 to an outer radial end 162 in the radial direction 101. Further, the finger plate element 100 comprises a first circumferential end 163 and a second circumferential end 164 spaced apart from the first circumferential end 163 in a circumferential direction 102 by an angle α. In Fig. 1 the angle α is 90° for the purpose of illustration. It should be understood that the angle α may be between 20° and 60°, particularly 22,5°, 30° or 60°. The inner radial end 161, the first circumferential end 163, the outer radial end 162 and the second circumferential end 164 form the outer boundaries of the laminated stack seen in a plane having a normal parallel to the axial direction 103. The boundary between the fixation portion 110 and the winding accommodation portion 120 is shown in Fig. 1 as a dashed line.

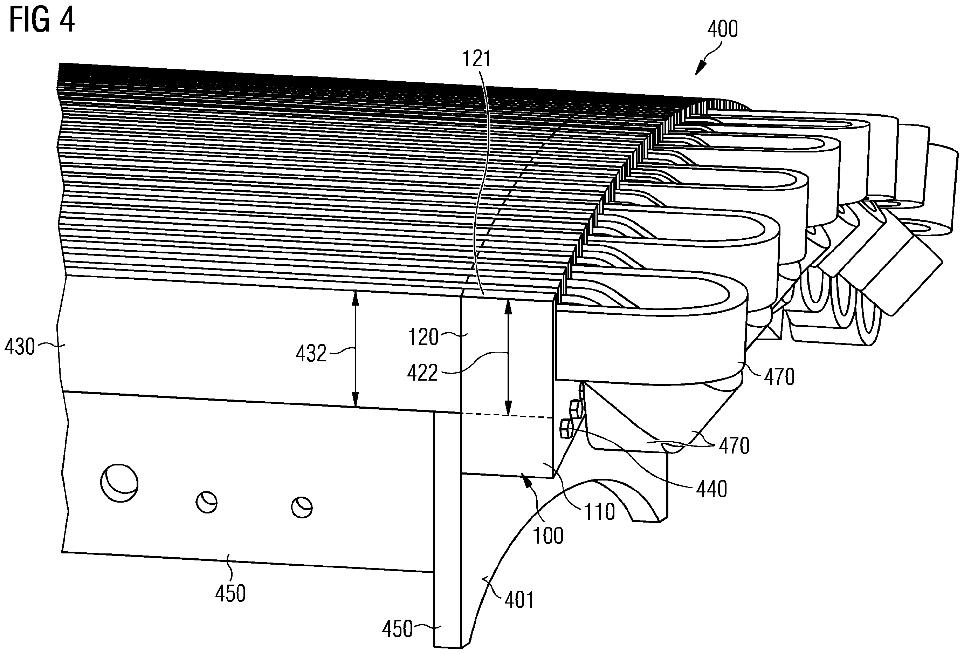

The fixation portion 110 comprises six through holes 111 for inserting fastening elements 440 for fixing the finger plate element 100 to an axial end 401 of a stator 400 (shown in detail in Fig. 4).

The winding accommodation portion 120 comprises a plurality of fingers 121 each extending in the radial direction 101. At a radial inner end of the fingers 121, each finger 121 is joint to a support section or yoke 122 which is located in the radial direction 101 between the fixation portion 110 and the fingers 121.

The finger plate element 100 comprises an arc-like shape in the circumferential direction 102. The arc-like shape in Fig. 1 corresponds to a fourth of the annular stator.

**Fig. 2** shows a side view of a finger plate element 100 according to a further exemplary embodiment of the invention. The finger plate element 100 comprises a plurality of sheets 201 forming a laminated stack 200. The boundary between the fixation portion 110 and the winding accommodation portion 120 is shown as a dashed line. The fixation portion 110 comprises a fixation thickness 211 in the axial direction 103. The winding accommodation portion 120 comprises a winding accommodation thickness 221 in the axial direction 103. The fixation thickness 211 is equal to the winding accommodation thickness 221.

Furthermore, the plurality of sheets 201 are alternatingly arranged in the axial direction 103 with a plurality of interconnecting layers 202. As the fixation thickness 211 and the winding accommodation thickness 221 are equal, the number of sheets 201 and the number of interconnecting layers 202 in the fixation portion 110 are equal to the number of sheets 201 and the number of interconnecting layers 202 in the winding accommodation portion 120.

**Fig. 3** shows a side view of a finger plate element 100 according to a further exemplary embodiment of the invention. The finger plate element 100 comprises a plurality of sheets 201 and a plurality of interconnecting layers 202 extending in the radial direction 101 from the inner radial end 161 to the outer radial end 162. Additionally, the laminated stack 300 comprises a plurality of further sheets 301 and a plurality of further interconnecting layers 302 extending in the radial direction 101 only in the winding accommodation portion 120. Thereby, the fixation thickness 311 in the axial direction 103 is smaller than the winding accommodation thickness 321 in the axial direction 103.

**Fig. 4** shows a perspective section of a stator 400 according to an exemplary embodiment of the present invention. The stator 400 comprises a support structure 450, windings 470, the finger plate element 100 and a lamination stack 430. The fixation portion 110 is mounted to an axial end 401 of the stator 400 by a plurality of fastening elements 440. Each fastening element 440 extends through a corresponding through hole 111 in the fixation portion 110 and is fixed to the support structure 450. The winding accommodation portion 120 is coupled to the lamination stack 430 for being in magnetic interaction with the lamination stack 430. Particularly, the winding accommodation portion 120 abuts an end surface of the lamination stack 430. Further, the winding accommodation portion 120 comprises the plurality of fingers 121, wherein each finger 121 extends between the windings 470.

The boundary between the fixation portion 110 and the winding accommodation portion 120 is shown in Fig. 4 as a dashed line. The winding accommodation portion 120 comprises a radial length 422 in the radial direction 101 and the lamination stack 430 comprises a radial extension 432 in the radial direction 101. Further, the radial length 422 and the radial extension 432 are equal. As shown in Fig. 4, the shape of the winding accommodation portion 120 corresponds to the shape of the lamination stack 430.

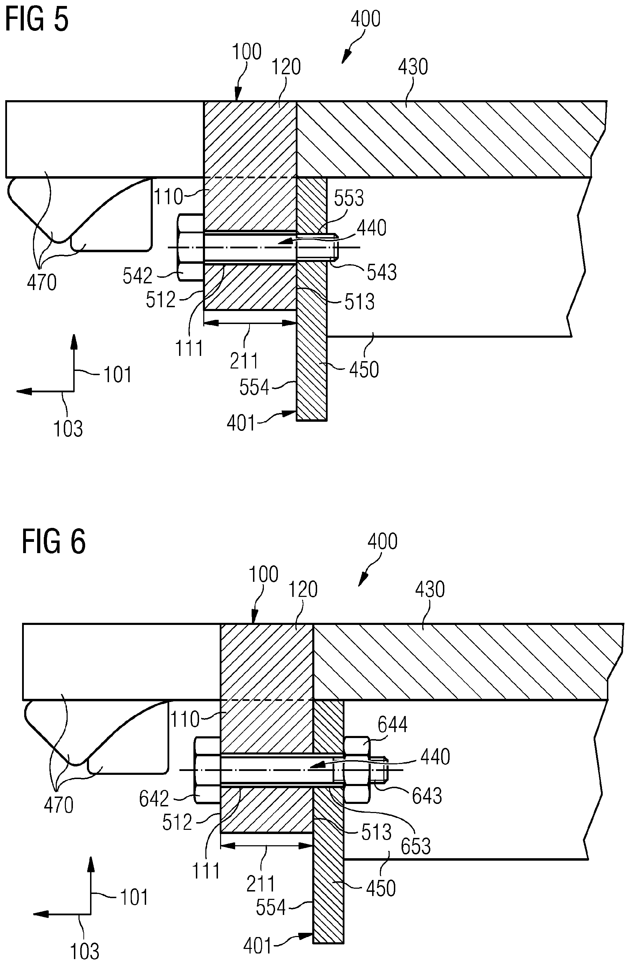

**Fig. 5** shows a cross-sectional view of a stator 400 according to a further exemplary embodiment of the present invention.

The fixation portion 110 comprises a through hole 111 extending through the entire fixation thickness 211 in the axial direction 103. The support structure 450 comprises a through hole comprising an internal thread 553. The fastening element 440 is inserted from an outside of the stator 400 seen in the axial direction 103 such that a head 542 of the fastening element 440 lies against an axial outer surface 512 of the fixation portion 110. An axial inner surface 513 of the fixation portion 110 lies planar against an axial end surface 554 of the support structure 450. The axial end surface 554 of the support structure 450 corresponds to the axial end 401 of the stator 400. The fastening element 440 comprises an end portion with an external thread 543. The external thread 543 of the fastening element 440 is threaded into the internal thread 553 in the support structure 450. It may be understood that the fastening element 440 as shown in Fig. 5 may also be fastened from an inside of the stator 400 such that the external thread 543 is threaded into an internal thread provided in the fixation portion 110, particularly in the through hole 111.

**Fig. 6** shows a cross-sectional view of a stator 400 according to a further exemplary embodiment of the present invention. The fixation portion 110 comprises a through hole 111 extending through the entire fixation thickness 211 in the axial direction 103. The support structure 450 comprises a through hole 653. The fastening element 440 is inserted from an outside of the stator 400 seen in the axial direction 103 such that a head 642 of the fastening element 440 lies against an axial outer surface 512 of the fixation portion 110. An axial inner surface 513 of the fixation portion 110 lies planar against an axial end surface 554 of the support structure 450. The axial end surface 554 of the support structure 450 corresponds to the axial end 401 of the stator 400. A nut 644 is screwed on an external thread 643 of the fastening element 440. The external thread 643 is formed on a distal end spaced apart from the head 642. It may be understood that the fastening element 440 as shown in Fig. 6 may also be fastened from an inside of the stator 400 such that the external thread 643 and the nut 644 are located at the outside of the support structure 450 seen in the axial direction 103. Particularly, the nut 644 lies against the axial outer surface 512 of the fixation portion 110.

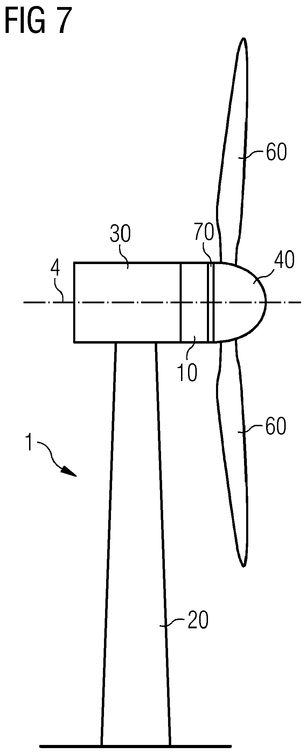

**Fig. 7** shows a schematic view of a wind turbine 1 including a stator 400 according to an exemplary embodiment of the invention. The wind turbine 1 comprises a nacelle 30 and a tower 20. The nacelle 30 is mounted at the top of the tower 20. The nacelle 30 is mounted rotatable with regard to the tower 20 by means of a yaw bearing.

The wind turbine 1 also comprises a hub 40 with three rotor blades 60 (of which two rotor blades 60 are depicted in Fig. 7). The hub 40 is mounted rotatable with regard to the nacelle 30 by means of a main bearing 70. The hub 40 is mounted rotatable about a rotor axis 4.

The wind turbine 1 furthermore comprises a generator 10. The generator 10 in turn comprises a stator 400(see Fig. 4) and a rotor. The rotor connects the generator 10 with the hub 40. The hub 40 is directly connected to the generator 10, thus the wind turbine 1 is referred to as a gearless, direct-driven wind turbine. Such a generator 10 is referred as direct drive generator. As an alternative, the hub 40 may also be connected to the generator 10 via a gear box. This type of wind turbine 1 is referred to as a geared wind turbine. The present invention is suitable for both types of wind turbines 1.

The generator 10 is accommodated within the nacelle 30. The generator 10 is arranged and prepared for converting the rotational energy from the hub 40 into electrical energy in the shape of an AC power.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

## Claims

1. A finger plate element (100) mountable to an axial end (401) of a stator (400) for an electric machine, in particular a wind turbine (1),
the finger plate element (100) comprising a plurality of sheets (201, 301) forming a laminated stack (200, 300) having
a fixation portion (110) which is formed for being fixable to a support structure (450) of the stator (400), and
a winding accommodation portion (120) configured for accommodating windings (470) of the stator (400), and
wherein the fixing portion (110) extends in a radial direction (101) from the winding accommodation portion (120) to an inner radial end (161) of the laminated stack (200, 300), wherein the winding accommodation portion (120) is coupleable to a lamination stack (430) of the stator (400) for being in magnetic interaction with the lamination stack (430) of the stator (400).

2. The finger plate element (100) according to claim 1, wherein the winding accommodation portion (120) comprises a plurality of fingers (121) configured for accommodating the windings (470) of the stator (400), and
wherein each of the plurality of fingers (121) extends in the radial direction (101).

3. The finger plate element (100) according to claim 1 or 2,
wherein the fixation portion (110) comprises a plurality of through holes (111) for inserting fastening elements (440) for fixing the laminated stack (200, 300) to the support structure (450) of the stator (400).

4. The laminated finger plate element (100) according to any one of the claims 1 to 3,
wherein the laminated stack (200, 300) comprises an arc-like shape in a circumferential direction (102).

5. The finger plate element (100) according to claim 4,
wherein the laminated stack (200, 300) comprises a first circumferential end (163) and a second circumferential end (164) being spaced apart from the first circumferential end (163) in the circumferential direction (102) by an angle between 20° and 60°.

6. The finger plate element (100) according to any one of the claims 1 to 5,
wherein the laminated stack (200, 300) further comprises a plurality of interconnecting layers (202, 302) alternatingly arranged along an axial direction (103) with the plurality of sheets (201, 301).

7. The finger plate element (100) according to any one of the claims 1 to 6,
wherein the fixation portion (110) comprises a fixation thickness (211, 311) in an axial direction (103),
wherein the winding accommodation portion (120) comprises a winding accommodation thickness (221, 321) in the axial direction (103), and
wherein the winding accommodation thickness (221) and the fixation thickness (211) are equal.

8. The finger plate element (100) according to any one of the claims 1 to 6,
wherein the fixation portion (110) comprises a fixation thickness (211, 311) in an axial direction (103),
wherein the winding accommodation portion (120) comprises a winding accommodation thickness (221, 321) in the axial direction (103), and
wherein the fixation thickness (311) is smaller than the winding accommodation thickness (321).

9. A stator (400) for an electric machine, in particular a wind turbine (1), wherein the stator (400) comprises a finger plate element (100) according to any one of the claims 1 to 8, a support structure (450), a lamination stack (430) and windings (470),
wherein the fixation portion (110) is fixed to the support structure (450) at the axial end (401) of the stator (400), and
wherein the winding accommodation portion (120) is coupled to the lamination stack (430) for being in magnetic interaction with the lamination stack (430).

10. The stator (400) according to claim 9,
wherein the winding accommodation portion (120) comprises a plurality of fingers (121),
wherein each of the plurality of fingers (121) extends in the radial direction (101) and extends between the windings (470).

11. The stator (400) according to claim 9 or 10,
wherein the winding accommodation portion (120) comprises a winding accommodation thickness (221, 321) in an axial direction (103), and
wherein the winding accommodation thickness (221, 321) is between 5% and 25%, particularly between 5% and 15%, more particularly between 5% and 10%, of an axial length of the lamination stack (430) in the axial direction (103).

12. The stator (400) according to any one of the claims 9 to 11,
wherein the winding accommodation portion (120) comprises a radial length (422) in the radial direction (101),
wherein the lamination stack (430) comprises a radial extension (432) in the radial direction (101), and
wherein the radial length (422) is equal to the radial extension (432).

13. The stator (400) according to any one of the claims 9 to 12,
wherein the stator (400) further comprises a further finger plate element (100) according to any one of the claims 1 to 8, and
wherein the further finger plate element (100) is mounted to an opposite axial end of the stator (400) by the fixation portion (110) of the further finger plate element (100).

14. A wind turbine (1) comprising a stator (400) according to any one of the claims 9 to 13.

15. A method for manufacturing a finger plate element (100) mountable to an axial end (401) of a stator (400) for an electric machine, in particular a wind turbine (1),
providing the finger plate element (100) with a plurality of sheets (201, 301) forming a laminated stack (200, 300) having
a fixation portion (110) which is formed for being fixable to a support structure (450) of the stator (400), and
a winding accommodation portion (120) configured for accommodating windings (470) of the stator (400),
forming the fixation portion (110) such that the fixation portion (110) extends in a radial direction (101) from the winding accommodation portion (120) to an inner radial end (161) of the laminated stack (200, 300), and
forming the winding accommodation portion (120) such that the winding accommodation portion (120) is coupleable to the lamination stack (430) of the stator (400) for being in magnetic interaction with the lamination stack (430) of the stator (400).
